# EUROPÄISCHE PATENTSCHRIFT

(11) **EP 0 619 472 B1**
(45) Veröffentlichungstag und Bekanntmachung des Hinweises auf die Patenterteilung: **10.06.1998**
(21) Anmeldenummer: 94103412.6
(22) Anmeldetag: 07.03.1994
(51) Int. Cl.: G01D 11/30, G01M 15/00

(54) **Messvorrichtung zur Erfassung des Drehwinkels rotierender Teile**
Angular displacement measuring device
Dispositif de mesure de déplacement angulaire

(30) Priorität: 08.04.1993 DE 4311725
(43) Veröffentlichungstag der Anmeldung: 12.10.1994
(73) Patentinhaber: ROBERT BOSCH GMBH, 70442 Stuttgart (DE)
(72) Erfinder: Breckel, Werner, Dipl.-Ing., D-73240 Wendlingen (DE); Anlauf, Jürgen, Dipl.-Ing., D-73035 Göppingen (DE); Roth, Rolf, Dipl.-Ing., D-73119 Zell U. Aichelberg (DE); Fellhauer, Michael, Dipl.-Ing., D-73312 Geislingen (DE); Nobis, Guenter, Dr. Ing., D-73240 Wendlingen (DE)

(56) Entgegenhaltungen:
- EP-A- 0 270 768
- FR-A- 777 073
- GB-A- 2 242 529

## Beschreibung

### Stand der Technik

Die Erfindung geht aus von einer Meßvorrichtung zur Erfassung des Drehwinkels rotierender Teile, insbesondere der Kurbelwelle einer Brennkraftmaschine für Kraftfahrzeuge, der im Oberbegriff des Anspruchs 1 definierten Gattung.

Solche Meßvorrichtungen dienen unter anderem zur Messung der Winkelgeschwindigkeit der Kurbelwelle für die Einzelzylinder-Diagnose von Brennkraftmaschinen bzw. Verbrennungsmotoren und ermöglichen weiterhin die kurbelwinkelabhängige Messung von Motordaten und damit Untersuchungen bezüglich des Verhaltens des Verbrennungsmotors bei verschiedenen Betriebsbedingungen.

Eine bekannte Meßvorrichtung für Verbrennungsmotoren dieser Art (Winkelaufnehmer 364 der FA. AVL List GmbH, Graz) ist als Kompletteinheit mit einem am Gehäuse drehbar gelagerten Flansch ausgebildet, der koaxial auf die Keilriemenscheibe des Verbrennungsmotors aufgesetzt und mittels Schrauben mit dieser drehfest verbunden wird. Hierzu müssen in die Keilriemenscheibe jedoch gesondere Gewindebohrungen zum Eindrehen der Flanschschrauben hochgenau eingeschnitten werden. Da Serienmotoren nicht werkseitig mit solchen Gewindebohrungen in der Keilriemenscheibe versehen werden und das nachträgliche Einbringen solcher Gewindebohrungen in die Keilriemenscheibe äußerst unwirtschaftlich ist, wird die bekannte Meßvorrichtung nur bei Forschungs- und Rennmotoren verwendet und hat bislang keinen Eingang in die Werkstattdiagnose bei der Wartung von Serienfahrzeugen gefunden.

Ferner ist aus der EP 0 270 768 A2 eine Meßvorrichtung zur Erfassung des Drehwinkels rotierender Teile bekannt, bei der ein mit dem rotierenden Teil drehfest verbundener Geber mit einem feststehenden, eine Winkelteilung abtastenden Aufnehmer zusammenarbeitet. Der Geber ist hierbei mit einer Zentriervorrichtung und einer Schnellverriegelung versehen, wozu dessen rohrförmiger Grundkörper zur Zentrierung in eine koaxiale Sacklochbohrung des rotierenden Teils ragt und durch ein mit Schrägfläche versehenes Klemmelement in der Sacklochbohrung und mittels einer im rohrförmigen Grundkörper liegenden Schraube drehfest verspannbar ist. Diese Klemmvorrichtung baut relativ aufwendig, ist umständlich zu bedienen und kann eine genaue Zentrierung des Gebers und damit dessen Betrieb störend beeinflussen, zumal die Klemmvorrichtung auf einem relativ kleinen Durchmesser wirksam ist und der eigentlichen Zentrierung entgegenwirkt. Auch ist der Geber selbst von einem gehäuseartigen Stator umgeben und daher schlecht unmittelbar handhabbar.

### Vorteile der Erfindung

Die erfindungsgemäße Meßvorrichtung mit den kennzeichnenden Merkmalen des Anspruchs 1 hat demgegenüber den Vorteil, daß sie sehr einfach und schnell montiert werden kann und dabei eine stabile und sichere Rotation der Winkelteilung gewährleistet. Das zu vermessende rotierende Teil braucht nicht mehr gesondert für die Aufnahme der Meßvorrichtung vorbereitet zu werden. Damit ist die Voraussetzung geschaffen, daß die erfindungsgemäße Meßvorrichtung im großen Umfang auch im Werkstattbetrieb zur Diagnose von Serienmotoren eingesetzt werden kann. Die Schnellverriegelung sorgt für eine schlupffreie Drehmitnahme der Winkelteilung mit dem rotierenden Teil, die Zentrierung für die exakt konzentrische Ausrichtung der Winkelteilung zur Rotationachse. Durch eine geeignete konstruktive Anordnung von Zentriervorrichtung und Schnellverriegelung kann letztere nicht wirksam werden, ohne daß zuvor die Zentrierung sichergestellt ist. Dadurch wird die Montage wesentlich vereinfacht und kann zeitsparend durchgeführt werden. Grifflöcher oder Aussparungen in dem Geber erleichtern dabei das Fassen des Gebers und das formschlüssige Aufsetzen der Zentriervorrichtung auf den Formkörper am rotierenden Teil.

Durch die in den weiteren Ansprüchen aufgeführten Maßnahmen sind vorteilhafte Weiterbildungen und Verbesserungen der im Anspruch 1 angegebenen Meßvorrichtung möglich.

In einer bevorzugten Ausführungsform der Erfindung, die speziell den Bedürfnissen bei Kraftfahrzeugen Rechnung trägt, weist der Geber einen in etwa scheibenförmigen Grundkörper und eine darauf zur Grundkörperachse konzentrisch aufgesetzte, die Winkelteilung tragende Kreisringscheibe auf, an deren von der Kreisringscheibe abgekehrten Rückseite ein davon rechtwinklig abstehendes, die Zentriervorrichtung bildendes koaxiales Zentrierteil ausgeformt ist. Die Schnellverriegelung ist kraftschlüssig mittels Permanentmagnete realisiert, die auf der gleichen Rückseite des Grundkörpers angeordnet sind. Die Meßvorrichtung wird nunmehr auf die mit der Kurbelwelle des Verbrennungsmotors fest verbundene und durch mindestens eine in das Stirnende der Kurbelwelle koaxial eingeschraubte Kopfschraube gesicherte Keilriemenscheibe aufgesetzt, wobei Zentrierteil den Schraubenkopf der mindestens einen Kopfschraube in koaxialer Ausrichtung zur Kurbelwelle im Formschluß übergreift und die Permanentmagnete sich an die Keilriemenscheibe anlegen. Damit ist die Geberseite der Meßvorrichtung schnell und mit kaum nennenswertem Zeitaufwand an der Kurbelwelle befestigt. Die Aufnehmerseite wird gesondert an einem relativ zur Kurbelwelle feststehenden, einstellbaren Haltearm befestigt und exakt zur Winkelteilung ausgerichtet.

In einer alternativen Ausführungsform der Erfindung, die insbesondere für die Werkstattdiagnose bevorzugt zum Einsatz kommt, sind Geber und Aufnehmer zu einer Baueinheit verbunden, so daß die Meßvorrichtung eine Kompletteinheit darstellt, die nur mittels Hilfswerkzeuge demontiert werden kann. Dabei ist die genaue Zuordnung von Geber und Aufnehmer immer gewährleistet und die Meßvorrichtung braucht lediglich in der zuvor beschriebenen einfachen Weise mit der Keilriemenscheibe des zu prüfenden Motors verbunden werden. Die Rüstzeiten für die Motordiagnose sind damit extrem kurz.

Bei einer solchen Kompletteinheit trägt gemäß einer bevorzugten Ausführungsform der Erfindung der Grundkörper auf seiner die Kreisringscheibe aufnehmenden Vorderseite einen mit dieser koaxialen Lagerzapfen, der axial vorsteht. Auf dem Lagerzapfen ist ein den Aufnehmer enthaltender Hebel drehgelagert, der sich mit seinem Hebelende an einem räumlich feststehenden Anschlag im Motorgehäuse abstützt. Der Hebel trägt ein vorzugsweise einstückiges Gehäuse, das ein auf dem Lagerzapfen sich abrollendes Radiallager aufnimmt und auf seiner der Kreisringscheibe am Grundkörper zugekehrten Rückseite den Sensor in Ausrichtung auf die Winkelteilung trägt.

### Zeichnung

Die Erfindung ist anhand von in der Zeichnung dargestellten Ausführungsbeispielen in der nachfolgenden Beschreibung näher erläutert. Es zeigen:
- Fig. 1: eine Meßvorrichtung zur Erfassung des Drehwinkels einer Kurbelwelle eines Verbrennungsmotors in Verbindung mit einer serienmäßigen Keilriemenscheibe, teilweise im Längsschnitt,
- Fig. 2: eine Ansicht des Gebers der Meßvorrichtung in Richtung Pfeil II in Fig. 1,
- Fig. 3: einen Schnitt längs der Linie III-III in Fig. 1,
- Fig. 4: einen Längsschnitt einer Meßvorrichtung gemäß einem weiteren Ausführungsbeispiel,
- Fig. 5: eine Ansicht der Meßvorrichtung gemäß Pfeil V in Fig. 4.

### Beschreibung der Ausführungsbeispiele

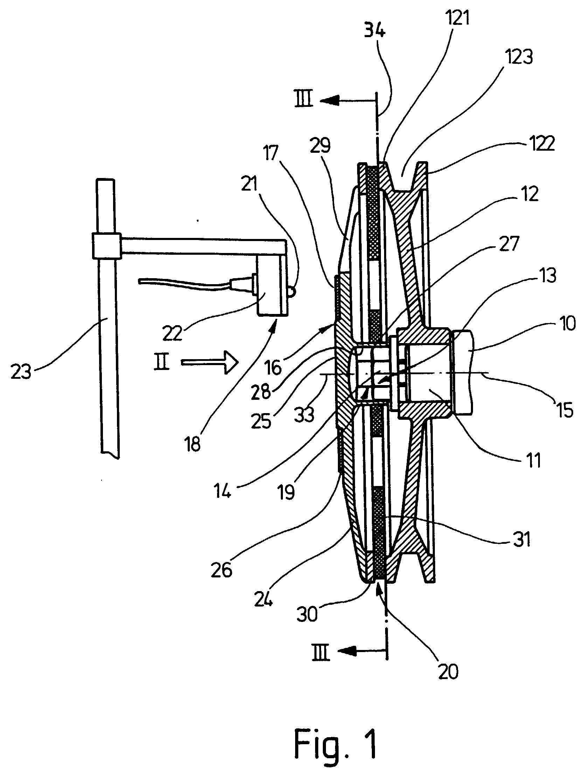

Die in Fig. 1 teilweise geschnitten dargestellte Meßvorrichtung dient zur Erfassung des Drehwinkels der Kurbelwelle 10 einer serienmäßigen Brennkraftmaschine, auch Verbrennungsmotor genannt, eines Serien-Kraftfahrzeugs, die für den werkstattmäßigen Einsatz zur Motordiagnose verwendet wird. In bekannter Weise ist auf der Stirnseite der Kurbelwelle 10 auf einem dort ausgebildeten Aufnahmezapfen 11 eine Keilriemenscheibe 12 drehfest auf die Kurbelwelle 10 aufgesetzt und durch eine Kopfschraube 13 mit Sechskant-Schraubenkopf 14, die in eine zur Kurbelwellenachse 15 koaxiale Gewindebohrung eingeschraubt ist, gesichert.

Die Meßvorrichtung zur Erfassung des Drehwinkels der Kurbelwelle 10 besteht aus einem Geber 16 mit einer mit der Kurbelwelle 10 synchron umlaufenden Winkelteilung 17 und einem feststehenden, die Winkelteilung 17 abtastenden Aufnehmer 18. Der Geber 16 ist mittels einer Zentriervorrichtung 19 formschlüssig auf die Keilriemenscheibe 12 aufgesetzt und mittels einer kraftschlüssigen Schnellverriegelung 20 an der Keilriemenscheibe 12 drehfest festgelegt. Der Aufnehmer 18 weist einen die Winkelteilung 17 abtastenden Sensor 21 und eine entsprechende Elektronik auf, die in einem Gehäuse 22 angeordnet sind. Der Sensor 21 ist dabei von dem Gehäuse 22 freigegeben und mit Axialabstand von der Winkelteilung 17, dieser unmittelbar gegenüberliegend, angeordnet. Das Gehäuse 22 ist an einem am Motorgehäuse gehaltenen verstellbaren Stativ 23 befestigt, so daß der Sensor 21 gegenüber der mit der Kurbelwelle 10 synchron drehenden Winkelteilung 17 feststeht.

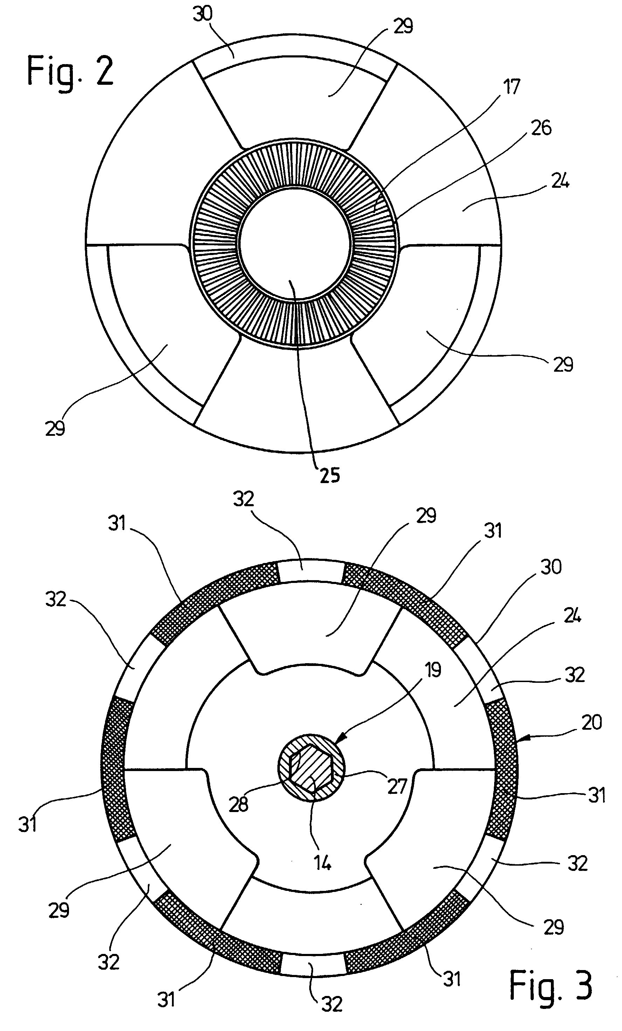

Wie aus Fig. 1 - 3 im einzelnen hervorgeht, weist der Geber 16 einen etwa tellerförmigen Grundkörper 24 auf, der auf seiner dem Aufnehmer 18 zugekehrten Vorderfläche einen zur Grundkörperachse 33 koaxialen Zentrierbund 25 trägt, auf dem eine Kreisringscheibe 26 formschlüssig aufsitzt und an der Vorderfläche angeklebt ist. Die Kreisringscheibe 26 trägt die Winkelteilung 17 (Fig. 2). Auf der davon abgekehrten Rückseite ist am tellerförmigen Grundkörper 24 eine davon rechtwinklig abstehende, mit dem Grundkörper 24 einstückige Zentrierkappe 27 ausgebildet, die konzentrisch zur Grundkörperachse 33 angeordnet ist und eine Innensechskant 28 trägt, der so ausgebildet ist, daß er sich formschlüssig auf den Schraubenkopf 14 der Kopfschraube 13 aufzuschieben vermag. Diese Zentrierkappe 27 mit Innensechskant 28 stellt die Zentriervorrichtung 19 dar. Wie aus Fig. 2 und 3 ersichtlich ist, weist der tellerförmige Grundkörper 24 drei jeweils um 120° gegeneinander versetzt angeordnete Aussparungen 29 auf, welche das Greifen des Grundkörpers 24 bei der Montage und das Aufsetzen der Zentrierkappe 27 auf die Kopfschraube 13 erleichtern.

Auf seiner von der Winkelteilung 17 abgekehrten Rückseite trägt der Grundkörper 24 einen am Tellerrand aufgesetzten planen Ring 30, auf dem Permanentmagnete 31 in Form von Kreisringsegmenten aufgesetzt sind. Die einzelnen Permanentmagnete 31 sind um gleiche Umfangswinkel zueinander versetzt auf dem Ring 30 angeordnet und an diesem befestigt. Zwischen den einzelnen Permanentmagneten 31 verbleiben Lücken 32. Der Durchmesser des Rings 30 und der Teilerkreis, auf dem die Permanentmagnete 31 angeordnet sind, sind selbstverständlich koaxial zur Grundkörperachse 33 ausgerichtet, und der Radius des Teilerkreises und die radiale Breite der Permanentmagnete 31 sind an die Keilriemenscheibe 12 so angepaßt, daß sich beim Aufsetzen der Zentrierkappe 27 auf die Kopfschraube 13 in der Keilriemenscheibe 12 sich die Permanentmagnete 31 auf die in Fig. 1 linke Wange 121 der die Keilriemenführung 123 einschließenden Wangen 121,122 weitgehend bündig aufsetzen. Die axiale Länge der Zentrierkappe 27 ist dabei so gewählt, daß sie mit ihrem freien Ende etwas über die mit den freien Stirnflächen der Permanentmagnete 31 bündige Ebene 34 (Fig. 1) vorsteht und damit beim Aufsetzen zunächst der Schraubenkopf 14 von der Zentrierkappe 27 übergriffen wird, bevor sich die planen Flächen der Permanentmagnete 31 auf die plane Fläche der Wange 121 aufsetzen können. Die Permanentmagnete 31 bilden zusammen mit der magnetisch leitfähigen Keilriemenscheibe 12 die kraftschlüssige Schnellverriegelung 20, die damit erst wirksam wird, nachdem der Grundkörper 24 auf der Keilriemenscheibe 12 zentriert ist, d.h. die Grundkörperachse 33 mit der Kurbelwellenachse 15 fluchtet. Das Lösen der Schnellverriegelung 20 erfolgt mittels eines Hilfswerkzeuges, z.B. eines Schraubenziehers, das in eine der Lücken 32 eingeschoben wird und mit dessen Hilfe dann der Grundkörper 24 gegen die Magnetkraft der Permanentmagnete 31 von der Keilriemenscheibe 12 abgedrückt werden kann.

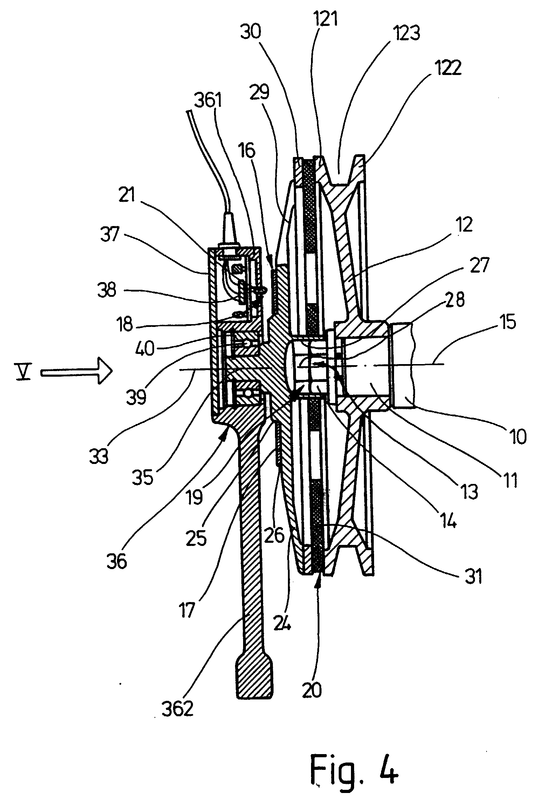

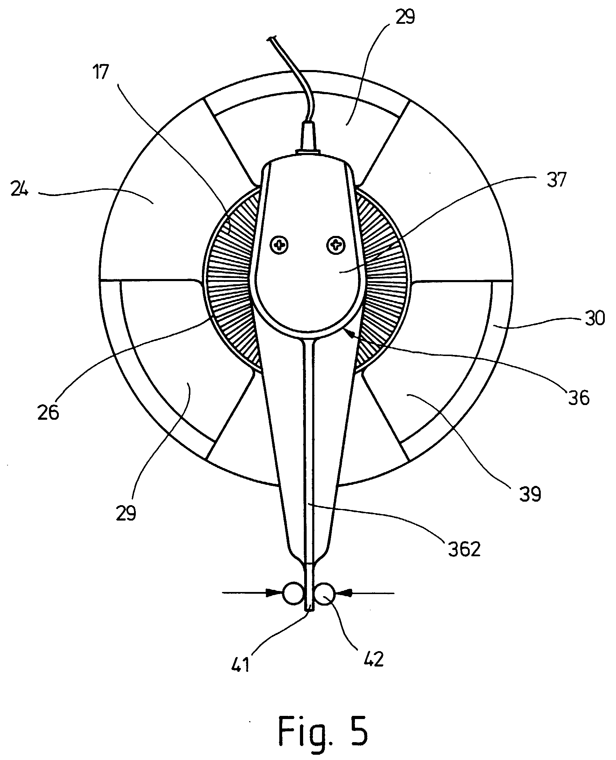

In Fig. 4 und 5 ist eine Meßvorrichtung zur Erfassung des Drehwinkels der Kurbelwelle 10 im Längsschnitt und in Draufsicht dargestellt, die gegenüber der zuvor beschriebenen Meßvorrichtung den Vorteil hat, daß Geber 16 und Aufnehmer 18 zu einer Kompletteinheit zusammengefaßt sind, bei welcher der Sensor 21 immer lagerichtig zur Winkelteilung 17 ausgerichtet ist und damit die separate Aufstellung des Aufnehmers 18, z.B. mittels des Statives 23 in Fig. 1, und die Ausrichtung des Sensors 21 zur Winkelteilung 17 entfällt. Diese Meßvorrichtung ist für den Werkstattgebrauch besonders vorteilhaft, da sie die Rüstzeiten für die Motordiagnose extrem verkürzt.

Bei der Meßvorrichtung in Fig. 4 und 5 ist der Grundkörper 24 identisch wie zu Fig. 1 - 3 beschrieben ausgebildet, so daß gleiche Bauelemente mit gleichen Bezugszeichen versehen sind. In Abwandlung von der Meßvorrichtung in Fig. 1 - 3 trägt der Grundkörper 24 auf seiner dem Aufnehmer 18 zugekehrten Vorderseite einen mit der Grundkörperachse 33 koaxialen Lagerzapfen 35, der einstückig mit dem Grundkörper 24 axial vorsteht. Der Aufnehmer 18 ist in einem Gehäuse 36 angeordnet, das einen Gehäusetopf 361 und einen vom Gehäusetopf 361 radial wegstrebenden Hebel 362 aufweist, der einstückig mit dem Gehäusetopf 361 ist. Der Gehäusetopf 361 ist von einem Gehäusedeckel 37 abgeschlossen. Im Gehäuse 36 ist neben dem Sensor 21 und der Elektronik 38 ein Radiallager 39 aufgenommen, das sich am Lagerzapfen 35 abstützt und das Gehäuse 36 fliegend auf dem Lagerzapfen 35 lagert. Durch einen Sicherungsring 40 ist das Gehäuse 36 axial unverschieblich am Lagerzapfen 35 gehalten, so daß Geber 16 und Aufnehmer 18 stets eine Kompletteinheit bilden, die nur mit einem Hilfswerkzeug demontiert werden kann.

Zur Verbindung der Meßvorrichtung mit der Kurbelwelle 10 wird in gleicher Weise vorgegangen, wie diese zu Fig. 1 beschrieben worden ist. Hierbei wird der Grundkörper 24 in seinen Aussparungen 29 gegriffen und mit der Zentrierkappe 27 auf den Schraubenkopf 14 der Kopfschraube 13 an der Keilriemenscheibe 12 aufgeschoben. Am Ende der Aufschiebebewegung legen sich die Permanentmagnete 31 infolge ihrer Magnetkraft an die Keilriemenscheibe 12 an und verbinden den Grundkörper 24 kraftschlüssig und drehfest mit der Keilriemenscheibe 12. Der Hebel 362 des Gehäuses 36 trägt am Hebelende eine Schneide 41, die in einem Gegenlager 42 am Motorgehäuse festgelegt wird. Das Gegenlager 42 ist in Fig. 5 schematisch angedeutet.

Die Erfindung ist nicht auf das vorstehend beschriebene Ausführungsbeispiel beschränkt. So kann die Meßvorrichtung nicht nur zur Erfassung des Drehwinkels der Kurbelwelle von Brennkraftmaschinen sondern allgemein zur Erfassung des Drehwinkels aller rotierender Teile verwendet werden. Aus der Drehwinkelmessung läßt sich die Winkelgeschwindigkeit des rotierenden Teils problemlos ableiten. Je nach Gegebenheiten kann die Schnellverriegelung 20 zum Verbinden des Gebers 16 mit dem rotierenden Teil oder einem drehfest mit dem rotierenden Teil verbundenen Element auch formschlüssig erfolgen. Die Zentriervorrichtung 19 zum formschlüssigen Aufsetzen des Gebers 16 auf das rotierende Teil selbst oder auf ein mit dem rotierenden Teil drehfest verbundenes Element kann an einem Adapter ausgebildet werden, der spielfrei mit dem Geber 16 verbunden wird. Ein solcher Adapter kann leicht ausgewechselt und gegen einen anders ausgebildeten Adapter ausgetauscht werden, so daß die Meßvorrichtung durch Austausch des Adapters universeller für rotierende Teile verwendbar wird, die unterschiedlich ausgebildete Formkörper für die Zentrierung des Gebers 16 tragen.

Bei größeren Verbrennungsmotoren ist die Keilriemenscheibe anstatt mit nur einer zentrischen Kopfschraube mit mehreren Schrauben befestigt, die auf einem zur Kurbelwellenachse konzentrischen Teilerkreis um gleiche Umfangswinkel zueinander versetzt angeordnet sind. In diesem Fall wird die Zentriervorrichtung nicht von einer Zentrierkappe, sondern von einem zur Kurbelwellenachse koaxialen Zentrierteil gebildet, das der Kopfform, Anzahl und Anordnung der Schrauben angepaßt ist und sich formschlüssig auf deren Schraubenköpfe aufsetzt. Dieses Zentrierteil wird zweckmäßig ebenfalls als Adapter ausgebildet, so daß durch Wechsel der Adapter die Meßvorrichtung bei unterschiedlichen Verbrennungsmotoren universell eingesetzt werden kann.

## Patentansprüche

1. Meßvorrichtung zur Erfassung des Drehwinkels rotierender Teile, mit einem mittel- oder unmittelbar mit dem rotierenden Teil (10) drehfest verbundenen, eine Winkelteilung (17) tragenden Geber (16) und mit einem relativ zum rotierenden Teil feststehenden, die Winkelteilung (17) abtastenden Aufnehmer (18), und bei der der Geber (16) eine Zentriervorrichtung (19) zum formschlüssigen Aufsetzen auf einen an dem rotierenden Teil (10) selbst oder an einem mit diesem drehfest verbundenen Element vorhandenen, zum rotierenden Teil (10) konzentrischen Formkörper aufweist und der Geber (16) ferner eine an dem rotierenden Teil selbst oder an dem mit diesem drehfest verbundenen Element kraft- oder formschlüssig angreifende Schnellverriegelung (20) zur schlupflosen Drehmitnahme aufweist, wobei die Zentriervorrichtung (19) und die Schnellverriegelung (20) so am Geber (16) ausgebildet sind, daß die Schnellverriegelung (20) erst nach erfolgter Zentrierung wirksam werden kann, dadurch gekennzeichnet, daß der Geber (16) einen etwa tellerförmigen Grundkörper (24) und eine darauf zur Grundkörperachse (33) konzentrisch aufgesetzte, die Winkelteilung (17) tragende Kreisringscheibe (26) aufweist, daß auf der von der Kreisringscheibe (26) abgekehrten Rückseite des Grundkörpers (24) mindestens ein davon rechtwinklig abstehendes, die Zentriervorrichtung (19) bildendes koaxiales Zentrierteil (27) zum Aufsetzen auf den mindestens einen Schraubenkopf (14) einer an dem rotierenden Teil (10) oder dem mit diesem drehfest verbundenen Element befestigen Kopfschraube (13) angeordnet ist und daß die Schnellverriegelung (20) mittels Permanentmagnete (31) realisiert ist, die auf der Rückseite des Grundkörpers (24) so angeordnet sind, daß sie sich nach erfolgter Zentrierung an dem rotierenden Teil oder dem damit drehfest verbundenen Element (12) anlegen.

2. Meßvorrichtung nach Anspruch 1, dadurch gekennzeichnet, daß das rotierende Teil die Kurbelwelle (10) einer Brennkraftmaschine mit darauf drehfest sitzender Keilriemenscheibe (12) ist, die mittels mindestens einer in das Stirnende der Kurbelwelle (10) eingeschraubten Kopfschraube (13) gesichert ist.

3. Meßvorrichtung nach Anspruch 2, dadurch gekennzeichnet, daß die Permanentmagnete (31) als Kreisringsegmente auf einem zur Grundkörperachse (33) konzentrischen Teilerkreis um vorzugsweise gleiche Umfangsmittel zueinander versetzt angeordnet sind und daß der Radius des Teilerkreises und die radiale Breite der Permanentmagnete (31) so gewählt sind, daß die Permanentmagnete (31) sich auf die eine seitliche Wange (121) der Keilriemenführung (123) an der Keilriemenscheibe (12) aufsetzen.

4. Meßvorrichtung nach einem der Ansprüche 1 bis 3, dadurch gekennzeichnet, daß die Permanentmagnete (31) über die Rückseite des Grundkörpers (24) vorstehen, daß zwischen den Permanentmagneten (31) Lücken (32) verbleiben und daß das Zentrierteil (27) mit seinem freien Ende etwas über die mit den freien Stirnflächen der Permanentmagnete (31) bündige Ebene (34) vorsteht.

5. Meßvorrichtung nach einem der Ansprüche 2 bis 4, dadurch gekennzeichnet, daß nur eine Kopfschraube (13) mit Sechskantschraubenkopf (14) koaxial in die Kurbelwelle (10) eingeschraubt ist und daß das Zentrierteil als am Grundkörper (24) ausgeformte Zentrierkappe (27) mit einem mit dem Sechskantschraubenkopf (14) formschlüssigen Innensechskant (28) ausgebildet ist.

6. Meßvorrichtung nach einem der Ansprüche 1 bis 4, dadurch gekennzeichnet, daß die die Winkelteilung (17) tragende Kreisringscheibe (26) auf einem von der Vorderseite des Grundkörpers (24) vorstehenden, zur Grundkörperachse (33) koaxiale Zentrierbund (25) aufgesetzt und an der Vorderfläche befestigt, vorzugsweise geklebt, ist.

7. Meßvorrichtung nach einem der Ansprüche 1 bis 6, dadurch gekennzeichnet, daß der die Winkelteilung (17) abtastende Aufnehmer (18) an einer relativ zum rotierenden Teil (10) feststehenden, als Stativ (23) ausgebildeten Haltevorrichtung befestigt ist.

8. Meßvorrichtung nach einem der Ansprüche 1 bis 6, dadurch gekennzeichnet, daß von der die Kreisringscheibe (26) tragenden Vorderseite des Grundkörpers (24) ein mit diesem koaxialer Lagerzapfen (35), vorzugsweise mit dem Grundkörper (24) einstückig, axial vorsteht, daß auf dem Lagerzapfen (35) ein den Aufnehmer (18) tragender Hebel (362) drehgelagert ist, der sich am Hebelende an einem relativ zum rotierenden Teil (10) feststehenden Anschlag (42) abstützt.

9. Meßvorrichtung nach Anspruch 8, dadurch gekennzeichnet, daß am Hebel (362) ein vorzugsweise mit diesem einstückiges Gehäuse (36) ausgebildet ist, das ein auf dem Lagerzapfen (35) sich abrollendes Radiallager (39) aufnimmt und auf seiner der Kreisringscheibe (26) am Grundkörper (24) zugekehrten Rückseite den Sensor (21) in Zuordnung zu der Winkelteilung (17) trägt.

10. Meßvorrichtung nach Anspruch 8 oder 9, dadurch gekennzeichnet, daß der Grundkörper (24) und der Hebel (361) mit Gehäuse (36) eine nur mit einem Hilfswerkzeug lösbare Baueinheit bilden.

11. Meßvorrichtung nach einem der Ansprüche 1 bis 11, dadurch gekennzeichnet, daß die Zentriervorrichtung (19) an einem mit dem Geber (16) spielfrei verbindbaren Adapter ausgebildet ist.

12. Meßvorrichtung nach einem der Ansprüche 1 bis 11, dadurch gekennzeichnet, daß der Geber (16) Aussparungen (29) zum montagegerechten Greifen aufweist.

## Claims

1. Measuring device for detecting the angular displacement of rotating parts, having a transmitter (16) that is rotationally fixedly connected, directly or indirectly, to the rotating part (10) and bears an angle graduation (17), and having a pick-up (18) which is stationary in relation to the rotating part and scans the angle graduation (17), and in which measuring device the transmitter (16) has a centring device (19) so that it can be fitted in a positively-locking manner on to a moulding that is present on the rotating part (10) itself or on an element that is rotationally fixedly connected thereto and is concentric with the rotating part (10), and the transmitter (16) further has a quick-action locking means (20), which engages in a frictional or positive-locking manner on the rotating part itself or on the element that is rotationally fixedly connected thereto, in order to be driven therewith in a slip-free manner, the centring device (19) and the quick-action locking means (20) being constructed on the transmitter (16) in such a way that the quick-action locking means (20) can become effective only after centring has been carried out, characterized in that the transmitter (16) has an approximately plate-shaped basic body (24) and an annular disc (26) that is fitted thereon in a manner concentric with the basic body axis (33) and bears the angle graduation (17), in that on the rear side of the basic body (24), facing away from the annular disc (26), there is arranged at least one coaxial centring part (27) that projects therefrom at right angles, forms the centring device (19) and is intended for fitting on to the at least one screw head (14) of a headed screw (13) that is fastened to the rotating part (10) or the element that is rotationally fixedly connected thereto, and in that the quick-action locking means (20) is implemented by means of permanent magnets (31), which are arranged on the rear side of the basic body (24) in such a way that, after centring has been carried out, they rest on the rotating part or on the element (12) that is rotationally fixedly connected thereto.

2. Measuring device according to Claim 1, characterized in that the rotating part is the crankshaft (10) of an internal combustion engine with a V-belt pulley (12) that is rotationally fixedly seated thereon and is secured by means of at least one headed screw (13) screwed into the end of the crankshaft (10).

3. Measuring device according to Claim 2, characterized in that the permanent magnets (31) are arranged offset from one another as annular segments on a pitch circle that is concentric with the basic body axis (33), preferably around identical circumferential means, and in that the radius of the pitch circle and the radial width of the permanent magnets (31) are selected such that the permanent magnets (31) are fitted on a lateral cheek (121) of the V-belt guide (123) on the V-belt pulley (12).

4. Measuring device according to one of Claims 1 to 3, characterized in that the permanent magnets (31) project beyond the rear side of the basic body (24), in that gaps (32) remain between the permanent magnets (31), and in that the centring part (27) projects with its free end somewhat beyond the plane (34) that is flush with the free end faces of the permanent magnets (31).

5. Measuring device according to one of Claims 2 to 4, characterized in that only one headed screw (13) with a hexagonal screw head (14) is screwed coaxially into the crankshaft (10), and in that the centring part is designed as a centring cap (27) shaped out on the basic body (24) and having an internal hexagon (28) positively locking with the hexagonal screw head (14).

6. Measuring device according to one of Claims 1 to 4, characterized in that the annular disc (26) bearing the angle graduation (17) is fitted on a centring collar (25) that projects from the front side of the basic body (24) and is coaxial with the basic body axis (33), and is fastened, preferably bonded, to the front face.

7. Measuring device according to one of Claims 1 to 6, characterized in that the pick-up (18) scanning the angle graduation (17) is fastened to a holding device that is stationary in relation to the rotating part (10) and is designed as a tripod (23).

8. Measuring device according to one of Claims 1 to 6, characterized in that from the front side, bearing the annular disc (26), of the basic body (24) a bearing pin (35) that is coaxial with the latter projects axially, preferably in one piece with the basic body (24), in that a lever (362) bearing the pick-up (18) is rotatably mounted on the bearing pin (35) and is supported at the lever end on a stop (42) that is stationary in relation to the rotating part (10).

9. Measuring device according to Claim 8, characterized in that there is formed on the lever (362) a housing (36) that is preferably designed in one piece therewith, receives a radial bearing (39) that rolls on the bearing pin (35) and, on its rear side facing the annular disc (26) on the basic body (24), bears the sensor (21) in relation to the angle graduation (17).

10. Measuring device according to Claim 8 or 9, characterized in that the basic body (24) and the lever (361), with the housing (36), form a constructional unit that can only be detached with an auxiliary tool.

11. Measuring device according to one of Claims 1 to 11, characterized in that the centring device (19) is formed on an adapter that can be connected without play to the transmitter (16).

12. Measuring device according to one of Claims 1 to 11, characterized in that the transmitter (16) has cutouts (29) that are suitable for gripping during assembly.

## Revendications

1. Dispositif de mesure pour détecter l'angle de rotation de pièces en rotation comprenant :
• une roue phonique (16) portant une division angulaire (17), reliée solidairement en rotation directement ou indirectement à la pièce en rotation (10) et,
• un récepteur ou capteur (18) détectant la division angulaire (17), et qui est fixe par rapport à la pièce rotative, et la roue phonique (16) comporte un dispositif de centrage (19) pour sa mise en place par une liaison par la forme sur la pièce rotative (10) ou sur un élément solidaire en rotation, ayant un corps de forme concentrique à la pièce rotative (10) et la roue phonique (16) comporte en outre un dispositif de verrouillage rapide (20) pour assurer l'entraînement en rotation sans glissement, agissant sur la pièce rotative, directement ou sur un élément relié solidairement en rotation de celle-ci, par une liaison par la force ou la forme,
• le dispositif de centrage (19) et le moyen de verrouillage rapide (20) étant réalisés sur la roue phonique (16) pour que le moyen de verrouillage rapide (20) ne devienne actif qu'une fois le centrage réalisé,
caractérisé en ce que
• la roue phonique (16) comprend un corps de base (24) sensiblement en forme de soucoupe et un disque annulaire circulaire (26) portant la division angulaire (17), rapporté concentriquement à l'axe du corps de base (33),
• la face arrière du corps de base (24) opposée au disque en anneau de cercle (26), comporte au moins une pièce de centrage (27), en saillie perpendiculairement par rapport à la face arrière, coaxiale, formant le dispositif de centrage (19) pour s'engager sur au moins une tête (14) d'une vis (13) prévue sur la pièce rotative (10) ou sur un élément relié solidairement à celle-ci, et
• le moyen de verrouillage rapide (20) est réalisé par des aimants permanents (31) prévus sur la face arrière du corps de base (24) pour qu'après le centrage, elle s'applique contre la pièce rotative ou contre un élément (12) solidaire en rotation de celle-ci.

2. Dispositif de mesure selon la revendication 1,
caractérisé en ce que
la pièce rotative est le vilebrequin (10) d'un moteur à combustion interne portant solidairement en rotation une poulie à courroie trapézoïdale (12) fixée à l'aide d'au moins une tête à vis (13) vissée dans l'extrémité frontale du vilebrequin (10).

3. Dispositif de mesure selon la revendication 2,
caractérisé en ce que
les aimants permanents (31) sont des segments d'anneau de cercle montés de manière décalée sur un cercle primitif concentrique à l'axe (33) du corps de base, de préférence suivant le même moyen périphérique, et le rayon du cercle primitif et la largeur radiale des aimants permanents (31) sont choisis pour que les aimants permanents (31) s'appuient sur un flasque latéral (121) de la gorge (123) de la poulie à courroie trapézoïdale (12).

4. Dispositif de mesure selon l'une des revendications 1 à 3,
caractérisé en ce que
les aimants permanents (31) sont en saillie par rapport au côté arrière du corps de base (24),
entre les aimants permanents (31), il subsiste des intervalles (32), et
la pièce de centrage (27) est en saillie avec son extrémité libre, sensiblement au-delà du plan (34) qui est à niveau avec la surface frontale libre des aimants permanents (31).

5. Dispositif de mesure selon l'une des revendications 2 à 4,
caractérisé en ce que
seulement une vis (13) à tête à six pans (14) est vissée coaxialement dans le vilebrequin (10), et la pièce de centrage est en forme de manchon de centrage (27) réalisé sur le corps de base (24), ce manchon ayant un six pans intérieur (28) pour une liaison par la forme avec la tête de vis (14) à six pans.

6. Dispositif de mesure selon l'une des revendications 1 à 4,
caractérisé en ce que
le disque en anneau de cercle (26) qui porte la division angulaire (17) est rapporté sur une collerette de centrage (25), coaxiale à l'axe (33) du corps de base, dépassant de la face avant du corps de base (24), en étant fixé sur sa face avant de préférence par collage.

7. Dispositif de mesure selon l'une des revendications 1 à 6,
caractérisé en ce que
le récepteur (18) qui détecte la division angulaire (17) est fixé sur un dispositif de fixation en forme de pied (23), fixe par rapport à la pièce rotative (10).

8. Dispositif de mesure selon l'une des revendications 1 à 6,
caractérisé en ce que
la face avant du corps de base (24) qui porte le disque en anneau de cercle (26) est munie d'un téton de palier (35) coaxial à ce corps de base, réalisé de préférence en une seule pièce avec le corps de base (24),
et sur le téton de palier (35), il est prévu monté à rotation un levier (362) qui porte le récepteur (18) et s'appuie à l'extrémité du levier contre une butée (42) fixe par rapport à la pièce rotative (10).

9. Dispositif de mesure selon la revendication 8,
caractérisé en ce que
le levier (362) comporte un boîtier (36) de préférence en une seule pièce avec celui-ci, qui reçoit sur un téton de palier (35), un palier radial (39) roulant sur ce téton, et dont le côté arrière du capteur (21) sur le corps de base (24), tourné vers le disque en anneau de cercle (26), porte le capteur (21) associé à la division angulaire (17).

10. Dispositif de mesure selon la revendication 8 ou 9,
caractérisé en ce que
le corps de base (24) et le levier (361) forment avec le boîtier (36), un ensemble constructif qui ne se détache qu'avec un outil.

11. Dispositif de mesure selon l'une des revendications 1 à 11,
caractérisé en ce que
le dispositif de centrage (19) est réalisé sous la forme d'un adaptateur qui se relie sans jeu à la roue phonique (16).

12. Dispositif de mesure selon l'une des revendications 1 à 9,
caractérisé en ce que
la roue phonique (16) comporte des découpes (29) permettant la préhension pour faciliter le montage.
